# EUROPÄISCHE PATENTSCHRIFT

(11) **EP 0 546 004 B1**
(45) Veröffentlichungstag und Bekanntmachung des Hinweises auf die Patenterteilung: **09.11.1994**
(21) Anmeldenummer: 91915329.6
(22) Anmeldetag: 02.09.1991
(51) Int. Cl.: B62M 1/10

(54) **TRETKURBELANTRIEB FÜR EIN FAHRRAD**
PEDAL CRANK DRIVE FOR A BICYCLE
COMMANDE DES MANIVELLES DU PEDALIER D'UNE BICYCLETTE

(30) Priorität: 04.09.1990 AT 1802/90
(43) Veröffentlichungstag der Anmeldung: 16.06.1993
(73) Patentinhaber: HILBER, Gerhard, A-5081 Anif 289 (AT)
(72) Erfinder: HILBER, Gerhard, A-5081 Anif 289 (AT)
(74) Vertreter: Hübscher, Heiner (AT)
(86) Internationale Anmeldenummer: AT9100098
(87) Internationale Veröffentlichungsnummer: WO9204230

(56) Entgegenhaltungen:
- FR-E-00 012 170
- GB-A- 0 232 424
- US-A- 3 828 621

## Beschreibung

Die Erfindung bezieht sich auf einen Tretkurbelantrieb für ein Fahrrad mit zwei über eine Tretkurbelachse drehfest miteinander verbundenen Tretkurbeln, einem wenigstens einen Zahnkranz aufweisenden Kettenrad, das gegenüber der Tretkurbelachse drehbar gelagert ist, und mit wenigstens einer bei einer Vorwärtsdrehung der Tretkurbeln belastbaren Kraftübertragungsfeder sowie einer im Belastungssinn der Kraftübertragungsfeder vorgespannten Dämpfungsfeder zwischen dem Kettenrad und der dem Kettenrad benachbarten Tretkurbel.

Zur Überwindung des oberen und unteren Totpunktes eines Tretkurbelantriebes ist es bekannt (CH-A-539 538), zwischen der Nabe des Kettenrades und dem auf dieser Nabe drehbar gelagerten Zahnkranz eine Zugfeder vorzusehen, die sich beim Abwärtstreten der Tretkurbel über die dem Zahnkranz vorauseilende Nabe des Kettenrades gespannt wird und sich im Totpunktbereich des Tretkurbelantriebes unter einer entsprechenden Drehmomentübertragung auf den Zahnkranz entspannt. Um innerhalb des zur Verfügung stehenden, begrenzten Federweges eine ausreichende Kraft speichern zu können, muß die Zugfeder entsprechend dimensioniert werden. Mit zunehmend härteren Kraftübertragungsfedern wird jedoch die gewünschte Wirkung wieder in Frage gestellt, weil der Radfahrer mit steigender Federkraft im Totpunktbereich des Tretkurbelantriebes immer weniger ein ausreichendes Stützmoment aufbringen kann, um ein Rückdrehen der Tretkurbel zu verhindern. Die Entspannung der Zugfeder kann daher zu einer deutlichen Verzögerung und in weiterer Folge zu einem Rückdrehen der Tretkurbel führen, was einem gleichmäßigen Drehen des Tretkurbelantriebes entgegensteht.

Darüber hinaus ist es bekannt (FR-A-12 170), die äußere Tretkurbel eines Tretkurbelantriebes zwischen den beiden Enden eines die Tretkurbelachse umschließenden, mit der Nabe des Kettenrades verbundenen Blattfederpaketes zu halten, so daß der eine Teil dieses Federpaketes bei einer Vorwärtsdrehung der Tretkurbel belastet wird und der andere, gegensinnig auf die Tretkurbel wirkende Teil des Blattfederpaketes als vorgespannte Dämpfungsfeder wirkt. Durch diese Dämpfungsfeder wird ein zusätzliches Stützmoment gegen ein Rückschlagen der Tretkurbel im Totpunktbereich erreicht. Trotz dieser Dämpfungsfeder stellt sich jedoch der erwünschte Effekt nicht ein, weil das jeweils wirksame Rückdrehmoment von der jeweiligen Vorspannung der bei der Vorwärtsdrehung der Tretkurbeln belasteten Kraftübertragungsfeder und damit vom Antriebsmoment des Tretkurbelantriebes durch den Radfahrer abhängt. Wegen dieser Abhängigkeit von der Tretkraft des Radfahrers führt auch eine Einstellbarkeit der Vorspannung der Kraftübertragungsfeder nicht zum Ziel, wie dies ebenfalls bekannt ist (US-A-3 828 621).

Der Erfindung liegt somit die Aufgabe zugrunde, einen Tretkurbelantrieb der eingangs geschilderten Art so zu verbessern, daß eine vorteilhafte Drehmomentverteilung über eine Kettenradumdrehung erreicht werden kann, ohne ein durch die Kraftübertragungsfeder bedingtes Rückschlagen befürchten zu müssen. (Anspruch 1).

Die Erfindung kann die gestellte Aufgabe dadurch weiterlösen, daß die Vorspannung der Dämpfungsfeder in Abhängigkeit vom Federweg der Kraftübertragungsfeder verstellbar ist.

Durch diese Maßnahme wird die jeweils wirksame Dämpfungskraft an die Belastung der Kraftübertragungsfeder angepaßt, wobei als Maß für die Änderung der Vorspannung der Dämpfungsfeder der von der Belastung abhängige Federweg der Kraftübertragungsfeder genommen wird. Wird aufgrund größerer Antriebskräfte, beispielsweise beim Bergauffahren, der Weg der Einfederung der Kraftübertragungsfeder größer, wird auch die Vorspannung der Dämpfungsfeder verstärkt, so daß das sonst beim Entspannen der Kraftübertragungsfeder wirksam werdende Rückdrehmoment auf die Tretkurbeln ausreichend gedämpft werden kann.

Zur konstruktiven Lösung der Verstellung der Vorspannung der Dämpfungsfeder in Abhängigkeit vom Federweg der Kraftübertragungsfeder kann die Dämpfungsfeder an einem im Sinne der Dämpfungsfeder federbelasteten Ratschenhebel abgestützt werden, der mit einer federbelasteten, wenigstens eine Raststellung für den Ratschenhebel aufweisenden Klinke zusammenwirkt. Vergrößert sich aufgrund der auftretenden Belastungen der Federweg der Kraftübertragungsfeder auf ein Maß, das ein Nachstellen des Ratschenhebels in die nächste Raststellung der Klinke erlaubt, so wird die Vorspannung der Dämpfungsfeder entsprechend dem Stellweg der Klinke vergrößert, womit die gewünschte Anpassung der Dämpfungskraft an die sich vergrößernden Belastungen des Tretkurbelantriebes erreicht wird.

Soll dabei eine Aufhebung oder spürbare Verminderung der Dämpfungskraft im Verstellbereich des Ratschenhebels zwischen zwei Raststellungen vermieden werden, so muß die das Nachstellen des Ratschenhebels bewirkende Feder entsprechend der Dämpfungsfeder bemessen werden.

Zur Entspannung der Dämpfungsfeder braucht lediglich die Klinke für den Ratschenhebel gelöst zu werden. Dies kann auf unterschiedliche Weise erfolgen. Besonders einfache Handhabungsverhältnisse ergeben sich, wenn die Klinke eine Anlaufbahn für ein Entriegelungsstück bildet, an dem die Klinke bei einer Kettenradumdrehung vorbeigeführt wird. Das auf die Anlaufbahn der Klinke auflaufende Entriegelungsstück löst die Klinke entgegen ihrer Federbelastung, was ein Rückstelen des durch die Kraftübertragungsfeder belasteten Ratschenhebels in seine Ausgangsstellung zur Folge hat. Um die Entriegelung des Ratschenhebels während der Fahrt in einfacher Weise vornehmen zu können, kann das Entriegelungsstück über einen Bowdenzug od. dgl. in die Umlaufbahn der Klinke ein- und ausgeschwenkt werden.

Zur Aufnahme der auftretenden Antriebs- und Dämpfungskräfte unter Einhaltung der begrenzten Federwege empfiehlt es sich, die Kraftübertragungsfeder und die Dämpfungsfeder als Druckfedern auszubilden, die zwischen sich die dem Kettenrad benachbarte Tretkurbel einspannen. Es muß jedoch für eine ausreichend steife Abstützung dieser Federn gegenüber dem Kettenrad gesorgt sein. Zu diesem Zweck können die Abstützungen für die Kraftübertragungsfeder und die Dämpfungsfeder im Bereich der von der Tretkurbel abgewandten Federenden durch die Schenkel einer im wesentlichen U-förmigen Halterung gebildet werden, die auf der Außenseite des Kettenrades anklemmbar ist und daher eine weitgehend herkömmliche Kettenradausbildung zuläßt, die auch für Mehrgangschaltungen mit zwei oder drei Zahnkränzen versehen sein kann. Die Halterung selbst kann ohne weiteres ausreichend dimensioniert werden, um die auftretenden Kräfte zu übernehmen, ohne die Drehbarkeit des Kettenrades gegenüber den Tretkurbeln zu behindern, weil ja die U-förmige Ausbildung der Halterung ein beidseitiges Umfassen der dem Kettenrad benachbarten Tretkurbel mit einem ausreichenden Spiel zur Drehung des Kettenrades gegenüber der Tretkurbel zuläßt.

In der Zeichnung ist der Erfindungsgegenstand beispielsweise dargestellt. Es zeigen
Fig. 1 einen erfindungsgemäßen Tretkurbelantrieb für ein Fahrrad in einer Seitenansicht,
Fig. 2 diesen Tretkurbelantrieb in einem Schnitt nach der Linie II-II der Fig. 1 und
Fig. 3 eine der Fig. 1 entsprechende Darstellung einer Ausführungsvariante.

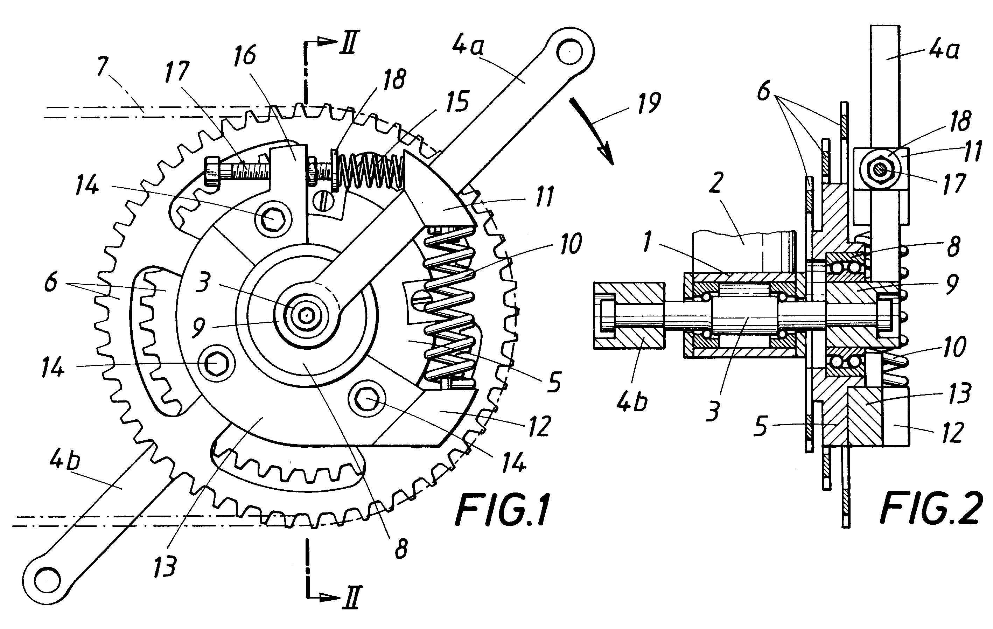

Der Tretkurbelantrieb gemäß den Fig. 1 und 2 besteht im wesentlichen aus einer in einem Lager 1 des Fahrradrahmens 2 drehbar gehaltenen Tretkurbelachse 3, die die zu beiden Rahmenseiten vorgesehenen, in üblicher Weise mit Pedalen versehenen Tretkurbeln 4a, 4b drehfest miteinander verbindet, und einem Kettenrad 5, das drei Zahnkränze 6 auswechselbar trägt, über die wahlweise eine strichpunktiert angedeutete Antriebskette 7 geführt wird. Zum Unterschied zu herkömmlichen Tretkurbelantrieben ist das Kettenrad 5 mit den Zahnkränzen 6 jedoch nicht drehfest mit der Tretkurbelachse 3 verbunden, sondern über ein Wälzlager 8 drehbar auf der Tretkurbelachse 3 bzw. der Nabe 9 der Tretkurbel gelagert. Zur Kraftübertragung zwischen den Tretkurbeln 4a, 4b und dem Kettenrad 5 dient eine Kraftübertragungsfeder 10, die auf der Außenseite des Kettenrades 5 in dessen Umfangsrichtung verläuft und zwischen einem Widerlager 11 der dem Kettenrad 5 benachbarten Tretkurbel 4a und einer Abstützung 12 einer U-förmigen Halterung 13 eingespannt ist, die mit Hilfe von Befestigungsschrauben 14 auf der Außenseite des Kettenrades 5 befestigt wurde. Die dem Kettenrad benachbarte Tretkurbel 4a wird von der Halterung 13 mit ausreichendem Spiel umfaßt, um zwischen dieser Tretkurbel 4a und dem Kettenrad 3 eine die Einfederung der als Druckfeder ausgebildeten Kraftübertragungsfeder 10 berücksichtigende Drehung zuzulassen. Auf der der Kraftübertragungsfeder 10 gegenüberliegenden Seite der Tretkurbel 4a ist eine Dämpfungsfeder 15 vorgesehen, die zwischen dem Widerlager 11 und einer Abstützung 16 am anderen Schenkel der U-förmigen Halterung 13 eingespannt ist, so daß die Ruhelage der Tretkurbel 4a durch das Gleichgewicht der Drehmomente der Federn 10 und 15 auf die Tretkurbel 4a bestimmt wird. Die Vorspannung der Federn 10 und 15 kann über eine Stellschraube 17 verändert werden, die einen Anschlag 18 für die Dämpfungsfeder 15 trägt.

Beim Abwärtstreten der Tretkurbel 4a im Sinne des Pfeiles 19 wird über die Kraftübertragungsfeder 10 das Antriebsmoment auf das Kettenrad 5 übertragen, wobei die Kraftübertragungsfeder 10 entsprechend der aufgewendeten Fußkräfte unter gleichzeitiger Entspannung der Dämpfungsfeder 15 zusammengedrückt wird, bis die untere Totpunktlage erreicht wird, in der das Antriebsmoment über die Tretkurbeln 4a, 4b ein Minimum erreicht, die Kraftübertragungsfeder 10 sich jedoch entspannt, so daß die gespeicherte Federkraft zur Totpunktüberwindung ausgenützt werden kann.

Damit keine schlagartige Entlastung der Kraftübertragungsfeder 10 und dadurch bedingt kein Stoß im Rückdrehsinn auf die Tretkurbeln 4a, 4b auftreten können, wird die Entspannung der Kraftübertragungsfeder 10 durch die Dämpfungsfeder 15 gedämpft, gegen deren zunehmende Federkraft sich die Kraftübertragungsfeder 10 entspannen muß. Durch diese Dämpfung können für die Aufnahme der Antriebskräfte ausreichend starke Kraftübertragungsfedern 10 zum Einsatz kommen, ohne eine Beeinträchtigung des gleichmäßigen Drehantriebes befürchten zu müssen. Die Dämpfungskraft muß nicht zwingend durch eine Feder aufgebracht werden, sondern kann auch durch einen Dämpfer sichergestellt werden.

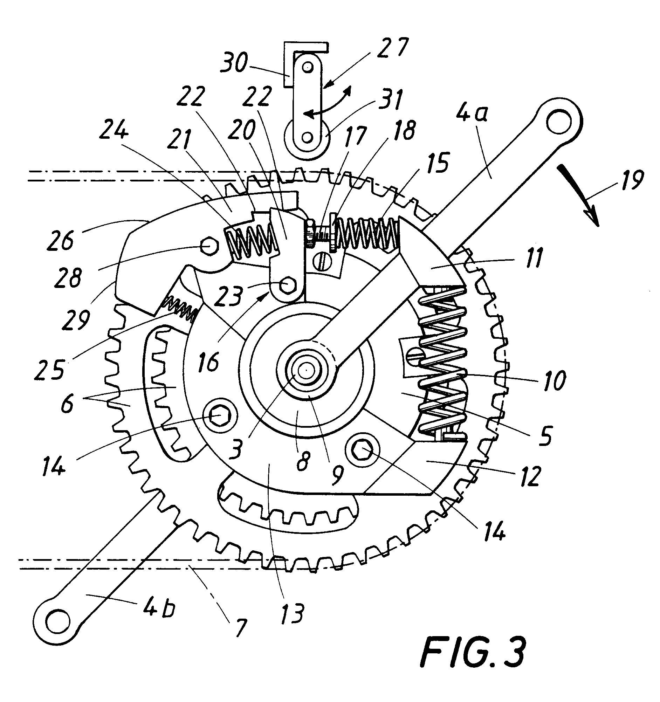

Um die Vorspannung der Dämpfungsfeder 15 in Abhängigkeit vom belastungsabhängigen Federweg der Kraftübertragungsfeder 10 erhöhen zu können, wird die Abstützung 16 gemäß der Fig. 3 als verstellbarer Ratschenhebel 20 ausgebildet, der mit einer Klinke 21 zusammenwirkt, die zwei Rastausnehmungen 22 für den Ratschenhebel 20 bildet. Der um eine Schwenkachse 23 gegenüber der Halterung 13 drehbar gelagerte Ratschenhebel 20 kann mit Hilfe einer im Sinne der Dämpfungsfeder 15 wirksamen Belastungsfeder 24 im Vorwärtsdrehsinn des Tretkurbelantriebes verstellt werden, wenn die Einfederung der Kraftübertragungsfeder 10 eine solche Nachstellung zuläßt. Die Belastungsfeder 24, die vorzugsweise entsprechend der Dämpfungsfeder 15 dimensioniert ist, übernimmt einen Teil der aufzubringenden Dämpfungskräfte für den Fall, daß der Ratschenhebel 20 aufgrund der Einfederung der Kraftübertragungsfeder 10 im Sinne des Pfeiles 20 aus der einen Rastausnehmung 22 ausgetreten ist, ohne in die nachfolgende Rastausnehmung einzurasten.

Zum Entriegeln des Ratschenhebels 20 weist die über eine Feder 25 im Verriegelungssinn belastete Klinke 21 eine Anlaufbahn 26 für ein Entriegelungsstück 27 auf, das mit Hilfe eines aus Übersichtlichkeitsgründen nicht dargestellten Bowdenzuges od. dgl. in die Umlaufbahn der Klinke 21 eingeschwenkt werden kann, so daß über das Entriegelungsstück 27 die Klinke 21 entgegen der Kraft der Feder 25 um ihre Lagerachse 28 ausgeschwenkt wird und den Ratschenhebel 20 freigibt, der bei entsprechend geringem Einfederweg der Kraftübertragungsfeder 10 durch die Kraftübertragungsfeder 10 zurückgeschwenkt wird. Nach dem Einfallen der Klinke 21 wird der Ratschenhebel 20 wieder in einer Rastausnehmung 22 gefangen und kann gegenüber der Klinke 21 ratschenartig vorgedreht werden, wenn der jeweils maximale Einfederweg der Kraftübertragungsfeder 10 dies zuläßt. Zur Begrenzung des möglichen maximalen Einfederweges der Kraftübertragungsfeder 10 kann zusätzlich ein Anschlag vorgesehen sein.

Das Entriegelungsstück 27 braucht allerdings nicht über einen Bowdenzug betätigt zu werden, wenn das Entriegelungsstück 27 beim Rückwärtstreten des Tretkurbelantriebes über eine Anlaufbahn 29 der Klinke 21 gegen einen Anschlag 30 gedrückt wird und in weiterer Folge die Klinke 21 gegen die Kraft der Feder 25 entriegelt, wie dies in der Fig. 3 angedeutet ist. In diesem Fall muß allerdings in Kauf genommen werden, daß bei jeder Vorwärtsdrehung die Anlaufbahn 26 der Klinke 21 das Entriegelungsstück 27 kurzzeitig anhebt, das zu diesem Zweck mit einer Auflaufrolle 31 versehen ist.

Es braucht wohl besonders hervorgehoben zu werden, daß die Kraftübertragungsfeder 10 unterschiedlich aufgebaut sein kann, weil es lediglich darum geht, die Tretkurbelkräfte über ein Federelement auf das Kettenrad 5 zu übertragen. So könnte an Stelle der bezeichneten Schraubenfeder 10 beispielsweise ein gummielastischer Körper oder eine Gasfeder treten. Eine andere Möglichkeit besteht darin, den die Abstützung 12 bildenden Schenkel der U-förmigen Halterung 13 als Biegefeder auszubilden, an der die Tretkurbel 4a entweder unmittelbar oder über ein Druckübertragungsstück angreift. Um die mit einer solchen Biegefeder verbundenen radialen Verschiebebewegungen zwischen der Tretkurbel 4a und der Feder zu berücksichtigen, kann die Biegefeder über eine Rolle an der Tretkurbel anliegen.

## Patentansprüche

1. Tretkurbelantrieb für ein Fahrrad mit zwei über eine Tretkurbelachse (3) drehfest miteinander verbundenen Tretkurbeln (4a, 4b), einem wenigstens einen Zahnkranz (6) aufweisenden Kettenrad (5), das gegenüber der Tretkurbelachse (3) drehbar gelagert ist, und mit wenigstens einer bei einer Vorwärtsdrehung der Tretkurbeln (4a, 4b) belastbaren Kraftübertragungsfeder (10) zwischen dem Kettenrad (5) und der dem Kettenrad (5) benachbarten Tretkurbel (4a), dadurch gekennzeichnet, daß zwischen dem Kettenrad (5) und der benachbarten Tretkurbel (4a) eine im Belastungssinn der Kraftübertragungsfeder (10) vorgespannte Dämpfungsfeder (15) vorgesehen ist.

2. Tretkurbelantrieb nach Anspruch 1, dadurch gekennzeichnet, daß die Vorspannung der Dämpfungsfeder (15) einstellbar ist.

3. Tretkurbelantrieb nach Anspruch 2, dadurch gekennzeichnet, daß die Vorspannung der Dämpfungsfeder (15) in Abhängigkeit vom Federweg der Kraftübertragungsfeder (10) verstellbar ist.

4. Tretkurbelantrieb nach Anspruch 3, dadurch gekennzeichnet, daß die Dämpfungsfeder (15) an einem im Sinne der Dämpfungsfeder (15) federbelasteten Ratschenhebel (20) abgestützt ist, der mit einer federbelasteten, wenigstens eine Raststellung (22) für den Ratschenhebel (20) aufweisenden Klinke (21) zusammenwirkt.

5. Tretkurbelantrieb nach Anspruch 4, dadurch gekennzeichnet, daß die Klinke (21) eine Anlaufbahn (26) für ein Entriegelungsstück (27) bildet.

6. Tretkurbelantrieb nach Anspruch 5, dadurch gekennzeichnet, daß das Entriegelungsstück (27) in die Umlaufbahn der Klinke (21) einschwenkbar ist.

7. Tretkurbelantrieb nach einem der Ansprüche 1 bis 6, dadurch gekennzeichnet, daß die Kraftübertragungsfeder (10) und die Dämpfungsfeder (15) als Druckfedern ausgebildet sind und die Tretkurbel (4a) zwischen sich einspannen.

8. Tretkurbelantrieb nach Anspruch 7, dadurch gekennzeichnet, daß die Abstützungen (12, 16) für die Kraftübertragungsfeder (10) und die Dämpfungsfeder (15) im Bereich der von der Tretkurbel (4a) abgewandten Federenden durch die Schenkel einer im wesentlichen U-förmigen Halterung (13) gebildet sind, die auf der Außenseite des Kettenrades (5) anklemmbar ist.

## Claims

1. A pedal drive for a bicycle, comprising two pedal cranks (4a, 4b) interconnected for rotation via a pedal crankshaft (3), a chain wheel (5) having at least one toothed rim (6), said chain wheel being mounted rotatably relatively to the pedal shaft (3), and comprising at least one force transmission spring (10) between the chain wheel (5) and the pedal crank (4a) adjacent the chain wheel (5), said spring (10) being loadable on a forward rotation of the pedals (4a, 4b), characterised in that a damping spring (15) biased in the direction of loading the power transmission spring (10) is provided between the chain wheel (5) and the adjacent pedal crank (4a).

2. A pedal drive according to claim 1, characterised in that the biasing of the damping spring (15) is adjustable.

3. A pedal drive according to claim 2, characterised in that the biasing of the damping spring (15) is adjustable in dependence on the travel of the force transmission spring (10).

4. A pedal drive according to claim 3, characterised in that the damping spring (15) is supported against a ratchet lever (20) spring-loaded in the direction of the damping spring (15) and co-operating with a spring-loaded pawl (21) having at least one detent position (22) for the ratchet lever (20).

5. A pedal drive according to claim 4, characterised in that the pawl (21) forms a guide track (26) for an unlocking member (27).

6. A pedal drive according to claim 5, characterised in that the unlocking member (27) is pivotable into the trajectory of the pawl (21).

7. A pedal drive according to any one of claims 1 to 6, characterised in that the force transmission spring (10) and the damping spring (15) are constructed as compression springs and clamp the pedal crank (4a) between them.

8. A pedal drive according to claim 7, characterised in that the supports (12, 16) for the force transmission spring (10) and the damping spring (15) are formed, in the region of the spring ends remote from the pedal crank (4a), by the limbs of a substantially U-shaped holder (13) adapted to be clamped on the outside of the chain wheel (5).

## Revendications

1. Entraînement à pédalier pour bicyclette, comportant deux bras de manivelle (4a, 4b) reliés fixement en rotation ensemble par un axe (3) de pédalier, une roue à chaîne (5) présentant au moins une couronne dentée (6), montée à rotation par rapport à l'axe de pédalier (3), et au moins un ressort de transmission d'effort (10), susceptible d'être chargé lors d'une rotation en marche avant des bras de manivelle (4a, 5b) et monté entre la roue dentée (5) et le bras de manivelle (4a) voisin de la roue dentée (5), caractérisé en ce qu'un ressort d'amortissement (15), précontraint dans le sens de sollicitation du ressort de transmission d'effort (10), est prévu entre la roue dentée (5) et le bras de manivelle (4a) voisin.

2. Entraînement à pédalier selon la revendication 1,
caractérisé en ce que la précontrainte du ressort d'amortissement (15) est réglable.

3. Entraînement à pédalier selon la revendication 2,
caractérisé en ce que la précontrainte du ressort d'amortissement (15) est réglable en fonction de la course élastique du ressort de transmission d'effort (10).

4. Entraînement à pédalier selon la revendication 3,
caractérisé en ce que le ressort d'amortissement (15) prend appui sur un levier à cliquet (20), sollicité élastiquement dans le sens du ressort d'amortissement (15) et coopérant avec un cliquet (21) sollicité par un ressort et présentant au moins une position d'encliquetage (22) pour le levier à cliquet (20).

5. Entraînement à pédalier selon la revendication 4,
caractérisé en ce que le cliquet (21) constitue une piste de franchissement (26) pour une pièce de déverrouillage (27).

6. Entraînement à pédalier selon la revendication 5,
caractérisé en ce que la pièce de déverrouillage (27) peut pénétrer par pivotement dans la trajectoire de pivotement du cliquet (21).

7. Entraînement à pédalier selon l'une des revendications 1 à 6,
caractérisé en ce que le ressort de transmission d'effort (10) et le ressort d'amortissement (15) sont réalisés sous forme de ressorts de pression et enserrent entre eux le bras de manivelle (4a).

8. Entraînement à pédalier selon la revendication 7,
caractérisé en ce que les appuis (12, 16) destinés au ressort de transmission d'effort (10) et au ressort d'amortissement (15) sont constitués, dans la zone des extrémités de ressorts opposées au bras de manivelle (4a), par les branches d'une fixation (13) sensiblement en U, pouvant être fixée par serrage sur la face extérieure de la roue à chaîne (5).
